# EUROPÄISCHE PATENTANMELDUNG

(11) **EP 4 782 684 A1**
(43) Veröffentlichungstag der Anmeldung: **29.07.2026**
(21) Anmeldenummer: 25154043.1
(22) Anmeldetag: 27.01.2025
(51) Int. Cl.: F03G 3/00, F16H 1/22, F16H 49/00, H02K 49/10

(54) **MAGNETISCHER KRAFTWANDLER**

(71) Anmelder: Air Innovation SH.P.K., 60000 n.n. Gjilan, Kosovo (AL)
(72) Erfinder: FEHMI, Mustafa, 60000 n.n. Gjilan, Kosovo (AL)
(74) Vertreter: Kador & Partner Part mbB

(57) **Zusammenfassung**

Die vorliegende Erfindung stellt einen magnetischen Kraftwandler zur Verfügung, der dadurch gekennzeichnet ist, dass er folgendes umfasst:
eine erste Querwelle 5, die von einem Antrieb in Rotation versetzt werden kann, wobei auf der ersten Querwelle 5 eine erste Querscheibe 29 und ein erstes Kegelzahnrad 10 angeordnet sind, die jeweils mit der ersten Querwelle 5 verbunden sind,
eine zweite Querwelle 19, auf der eine zweite Querscheibe 17 und ein zweites Kegelzahnrad 20 angeordnet sind, die jeweils mit der zweiten Querwelle 19 verbunden sind,
eine Arbeitswelle 7, die gegenüber der Querwelle 5 winklig angeordnet ist, und auf der eine erste Zahnscheibe 13 und eine zweite Zahnscheibe 24 angeordnet sind, wobei die erste Zahnscheibe 13 mit der Arbeitswelle verbunden ist und die zweite Zahnscheibe 24 gegenüber der Arbeitswelle 7 freilaufend angeordnet ist, wobei
jeweils die Verzahnung von erstem Kegelzahnrad 10 und zweiten Kegelzahnrad 20 in jeweils die Verzahnung von erster und zweiter Zahnscheibe 13, 24 eingreifen, so dass im Betrieb des Kraftwandlers eine gemeinsame Rotation der Kegelzahnräder 10 und 20 und der Zahnscheiben 13 und 24 in der Weise bewirkt wird, dass sowohl eine gegensinnige Bewegung der ersten Zahnscheibe 13 gegenüber der zweiten Zahnscheibe 24, als auch eine gegensinnige Bewegung des ersten Kegelzahnrads 10 gegenüber dem zweiten Kegelzahnrad 20 erfolgt,
die erste Querscheibe 29 ein Magnetelement 30 umfasst, dessen einer Pol A sich auf der der Arbeitswelle 7 zugewandten Seite befindet,
die zweite Querscheibe 17 ein Magnetelement 22 umfasst, dessen einer Pol B sich auf der der Arbeitswelle 7 zugewandten Seite befindet,
an der dem ersten und zweiten Kegelzahnrad 10, 20 abgewandten Seite der zweiten Zahnscheibe 24 ein Magnetelement 28 befestigt ist, dessen einer Pol A radial nach Außen weist,
an der dem ersten und zweiten Kegelzahnrad abgewandten Seite der ersten Zahnscheibe 13 ein Magnetelement 14 befestigt ist, dessen einer Pol A radial nach Außen weist,
wobei weiterhin die Zahnscheiben 13 und 24 und die Querscheiben 29 und 17 so dimensioniert und relativ zueinander angeordnet sind, dass in einer Nullstellung das Magnetelement 28 der zweiten Zahnscheibe 24 und das Magnetelement 14 der ersten Zahnscheibe 13 maximalen Abstand voneinander aufweisen, das Magnetelement 28 der zweiten Zahnscheibe 24 und das Magnetelement 30 der ersten Querscheibe 29 minimalen Abstand voneinander aufweisen und das Magnetelement 22 der zweiten Querscheibe 17 und das Magnetelement 30 der ersten Querscheibe 29 minimalen Abstand zueinander aufweisen.

Die vorliegende Erfindung bezieht sich weiterhin auf ein Verfahren zum Betrieb eines magnetischen Kraftwandlers in einer der hier beschriebenen Ausführungsformen und auf die Verwendung eines magnetischen Kraftwandlers in einer der hier beschriebenen Ausführungsformen zum Betrieb einer technischen Vorrichtung, wie zum Beispiel eines Kraftfahrzeugs, Flugzeugs oder Schiffs.

## Beschreibung

Die vorliegende Erfindung bezieht sich auf einen neuartigen magnetischen Kraftwandler, ein Verfahren, in dem dieser benutzt wird und die Verwendung des Kraftwandlers.

Bei Motoren ist es eines der Hauptziele, die durch den eingesetzten Kraftstoff erhaltene Energie so effektiv wie möglich zu nutzen, d.h. einen so hohen Wirkungsgrad wie möglich zu erzielen, um dadurch Kraftstoff einzusparen.

Die vorliegende Erfindung hat sich daher zur Aufgabe gemacht, eine Vorrichtung zur Verfügung zu stellen, die dieses Hauptziel unterstützt.

Der Erfindung liegt die Erkenntnis zugrunde, dass diese Aufgaben durch den Einsatz von Magnetkräften in einem Kraftwandler gelöst werden kann.

Die vorliegende Erfindung stellt daher einen magnetischen Kraftwandler zur Verfügung, der dadurch gekennzeichnet ist, dass er folgendes umfasst:
eine erste Querwelle 5, die von einem Antrieb in Rotation versetzt werden kann, wobei auf der ersten Querwelle 5 eine erste Querscheibe 29 und ein erstes Kegelzahnrad 10 angeordnet sind, die jeweils mit der ersten Querwelle 5 verbunden sind,
eine zweite Querwelle 19, auf der eine zweite Querscheibe 17 und ein zweites Kegelzahnrad 20 angeordnet sind, die jeweils mit der zweiten Querwelle 19 verbunden sind,
eine Arbeitswelle 7, die gegenüber der Querwelle 5 winklig angeordnet ist, und auf der eine erste Zahnscheibe 13 und eine zweite Zahnscheibe 24 angeordnet sind, wobei die erste Zahnscheibe 13 mit der Arbeitswelle verbunden ist und die zweite Zahnscheibe 24 gegenüber der Arbeitswelle 7 freilaufend angeordnet ist, wobei
jeweils die Verzahnung von erstem Kegelzahnrad 10 und zweiten Kegelzahnrad 20 in jeweils die Verzahnung von erster und zweiter Zahnscheibe 13, 24 eingreifen, so dass im Betrieb des Kraftwandlers eine gemeinsame Rotation der Kegelzahnräder 10 und 20 und der Zahnscheiben 13 und 24 in der Weise bewirkt wird, dass sowohl eine gegensinnige Bewegung der ersten Zahnscheibe 13 gegenüber der zweiten Zahnscheibe 24, als auch eine gegensinnige Bewegung des ersten Kegelzahnrads 10 gegenüber dem zweiten Kegelzahnrad 20 erfolgt,
die erste Querscheibe 29 ein Magnetelement 30 umfasst, dessen einer Pol A sich auf der der Arbeitswelle 7 zugewandten Seite befindet,
die zweite Querscheibe 17 ein Magnetelement 22 umfasst, dessen einer Pol B sich auf der der Arbeitswelle 7 zugewandten Seite befindet,
an der dem ersten und zweiten Kegelzahnrad 10, 20 abgewandten Seite der zweiten Zahnscheibe 24 ein Magnetelement 28 befestigt ist, dessen einer Pol A radial nach Außen weist,
an der dem ersten und zweiten Kegelzahnrad abgewandten Seite der ersten Zahnscheibe 13 ein Magnetelement 14 befestigt ist, dessen einer Pol A radial nach Außen weist,
wobei weiterhin die Zahnscheiben 13 und 24 und die Querscheiben 29 und 17 so dimensioniert und relativ zueinander angeordnet sind, dass in einer Nullstellung das Magnetelement 28 der zweiten Zahnscheibe 24 und das Magnetelement 14 der ersten Zahnscheibe 13 maximalen Abstand voneinander aufweisen, das Magnetelement 28 der zweiten Zahnscheibe 24 und das Magnetelement 30 der ersten Querscheibe 29 minimalen Abstand voneinander aufweisen und das Magnetelement 22 der zweiten Querscheibe 17 und das Magnetelement 30 der ersten Querscheibe 29 minimalen Abstand zueinander aufweisen.

Im erfindungsgemäßen magnetischen Kraftwandler wird die über Verbindungswelle 1 eingebrachte Rotationskraft, beispielsweise eines Verbrennungs- oder Elektromotors, durch die durch die sich überlagernden Magnetfelder der Magnetelement unterstützt, und über die Arbeitswelle einer Arbeitsmaschine zugeführt. Dies erhöht die Effizienz und senkt somit die Kosten durch einen geringeren Verbrauch von Brennstoff oder elektrischer Energie.

Mit dem magnetischen Kraftwandler gemäß der Erfindung kann die auf die Arbeitswelle wirkende Kraft proportional zur Magnetkraft bis zu einem bestimmten Wert verstärkt werden und somit kann die Belastung des Antriebsmotors reduziert werden.

Die Positionierung der Magnetelemente auf den Quer- und Zahnscheiben 29, 17 und 24, 13 zielt auf die Reduzierung direkter Gegenkräfte, z.B. kann die Querscheibe 29 ein Magnetelement 30 mit einem Südpol S aufweisen, das bei der Drehbewegung in eine bestimmte Richtung keine direkte Gegenkraft erfährt, während andererseits die Magnetkraft des Südpols S des Magnetelements 30 direkt entgegengesetzt mit der des beispielsweise ebenfalls als Südpol ausgebildeten Pols des Magnetelements 28 der Zahnscheibe 24 abstoßend zusammenwirkt und daher Zahnscheibe 24 in Richtung auf eine Position bewegt wird, in der sich Magnetelement 28 in Position 23 befindet. Zu dieser Bewegung trägt auch die anziehende Kraft des beispielsweise als Nordpol ausgebildeten Pols des Magnetelements 22 der Querscheibe 17 sowie auf den Magneten und des Südpols des Magnetelements 28 der Zahnscheibe 24 bei.

Der magnetische Kraftwandler ist aufgrund der Möglichkeit, die Drehrichtung der Arbeitswelle zu ändern, gut für einen elektrischen Antrieb geeignet.

Pol A und B sind gegensinnige Pole von Magneten, d.h. wenn A Südpol S eines Magneten ist, dann bezeichnet B den Nordpol N und umgekehrt.

Der erfindungsgemäße magnetische Kraftwandler kann in verschiedensten technischen Vorrichtungen in allen möglichen Industriezweigen eingesetzt werden, z.B. Luftfahrt, Drohnen, Fahrzeuge, Robotik, Züge, Generatoren, Windturbinen.

Der Kraftwandler kann beliebige Größe haben, und beispielsweise in einem Kraftrad, Kraftfahrzeug, Boot, Schiff oder Flugzeug eingesetzt werden. Er ermöglicht durch seine kompakte Form einen platzsparenden Einbau.

Die im magnetischen Kraftwandler der vorliegenden Erfindung verwendete Zahnradverbindung ist einfach auszuführen und bietet eine hohe Betriebssicherheit.

In einer bevorzugten Ausführungsform des erfindungsgemäßen magnetischen Kraftwandlers ist die Arbeitswelle 7 gegenüber der ersten Querwelle 5 und oder der zweiten Querwelle 18 rechtwinklig angeordnet ist.

Weiterhin sind vorzugsweise die erste Querwelle 5 und die zweite Querwelle 19 auf einer gemeinsamen imaginären Achse angeordnet.

Eines oder mehrere der Magnetelemente 14, 28, 22, 30 weist üblicherweise eine maximale Ausdehnung von 10 bis 30°, bezogen auf den Umfang der Scheibe (360°), auf der sie jeweils angebracht sind, auf.

Vorzugsweise sind die Magnetelemente 28, 14 der Zahnscheiben 13, 24 jeweils am äußeren Rand der der Verzahnung gegenüberliegenden Seite der Zahnscheiben 13, 24 angebracht.

In einer bevorzugten Ausführungsform sind die Magnetelemente 28, 14 der Zahnscheiben 13, 24 jeweils als Zylinder ausgebildet und so magnetisiert, dass ihr Pol A an Ihrer Außenseite zumindest in dem Bereich, der vom Zahnscheibenmittelpunkt radial nach Außen weist, vorhanden ist.

Bevorzugt weist das Magnetelement 30 der ersten Querscheibe 30 eine Magnetisierung in der Weise auf, dass sein Pol A zumindest in dem Bereich vorhanden ist der in Richtung des ersten Kegelzahnrads 10 weist und/oder weist das Magnetelement 22 der zweiten Querscheibe eine Magnetisierung in der Weise auf, dass sein Pol B zumindest in dem Bereich vorhanden ist der in Richtung des zweiten Kegelzahnrad 20 weist.

Im magnetischen Kraftwandler gemäß der Erfindung sind dessen Element vorzugsweise so eingerichtet, dass die Nullstellung nach einer oder mehrerer vollen Umdrehungen, vorzugsweise einer vollen Umdrehung, wieder erreicht wird.

Üblicherweise werden Zahnräder und Lager des erfindungsgemäßen magnetischen Kraftwandlers in herkömmlicher Weise mit Schmierstoff versorgt.

Die vorliegende Erfindung bezieht sich weiterhin auf ein Verfahren zum Betrieb eines magnetischen Kraftwandlers in einer der hier beschriebenen Ausführungsformen und auf die Verwendung eines magnetischen Kraftwandlers in einer der hier beschriebenen Ausführungsformen zum Betrieb einer technischen Vorrichtung, wie zum Beispiel eines Kraftfahrzeugs, Flugzeugs oder Schiffs.

### Beispiel

Eine Ausführungsform des erfindungsgemäßen Verbrennungsmotors wird im Folgenden unter Bezugnahme auf die Figur näher beschrieben.

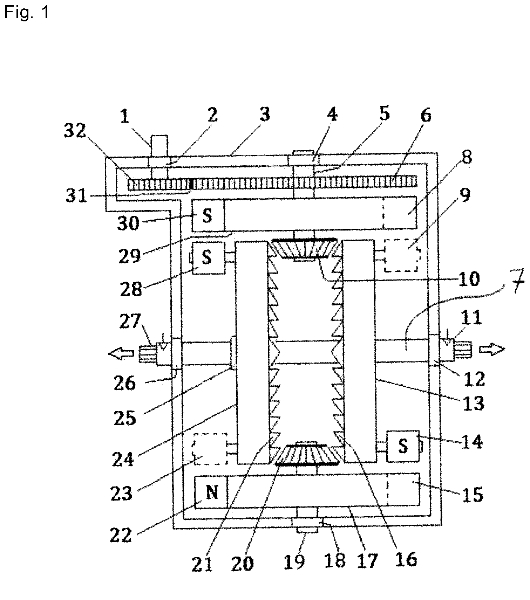

Fig. 1 zeigt eine Draufsicht einer Ausführungsform des erfindungsgemäßen magnetischen Kraftwandlers.

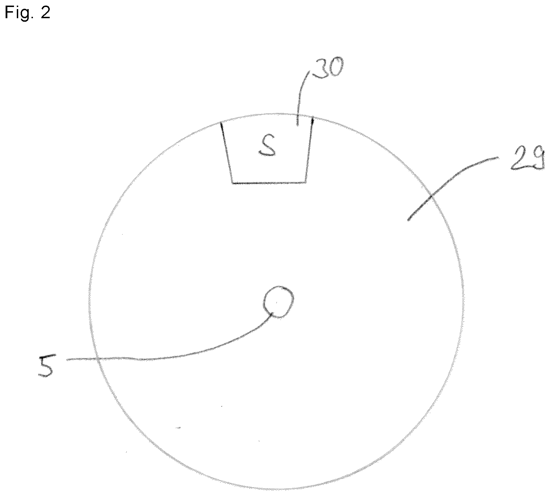

Fig. 2 zeigt eine Draufsicht auf die Seite der ersten Querscheibe 29 mit Magnetelement.

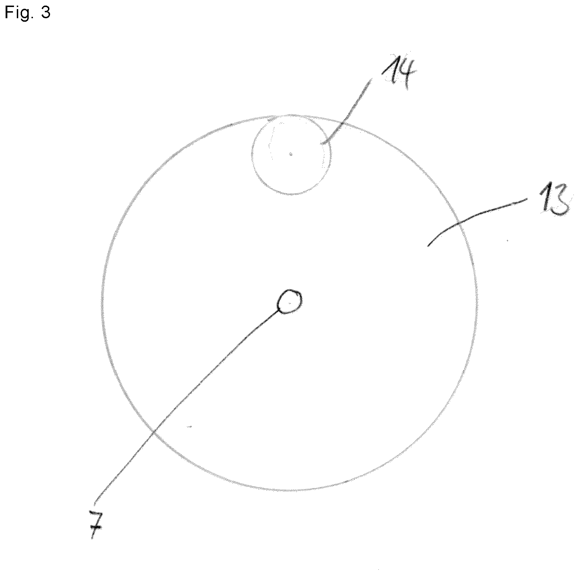

Fig. 3 zeigt eine Draufsicht auf die nicht verzahnte Seite der ersten Zahnscheibe 13.

Die in den Figuren gezeigte Ausführungsform des erfindungsgemäßen magnetischen Kraftwandlers weist eine erste Querwelle 5, die mit ihrem einen Ende in einem Lager 4 des Gehäuses 3 des magnetischen Kraftwandlers drehbar gelagert ist, eine zweite Querwelle 19, die mit ihrem einen Ende in einem Lager 18 des Gehäuses 3 drehbar gelagert ist, sowie eine Arbeitswelle 7, die mit ihrem einen Ende 27 in Lager 26 des Gehäuses 3 und mit ihrem anderen Ende 11 in Lager 12 des Gehäuses 3 drehbar gelagert ist, auf.

Querwellen 5 und 19 liegen auf derselben imaginären Achse und sind in Lagern 4, 18 auf gegenüberliegenden Seiten des Gehäuses 3 gelagert.

Weiterhin ist eine Verbindungswelle 1 zur Verbindung des magnetischen Kraftwandlers mit einer Antriebsvorrichtung wie zum Beispiel einem Verbrennungs- oder einem Elektromotor vorhanden, die in einem Lager 2 des Gehäuses 3 drehbar gelagert ist. Verbindungswelle 1 steht senkrecht auf der imaginären Achse der Querwellen 5 und 19.

Auf der Verbindungswelle 1 und mit ihr verbunden befindet sich ein Zahnrad 32, dass an der Eingriffstelle 31 in Zahnrad 6, das sich auf der ersten Querwelle 5 befindet und mit ihr verbunden ist, eingreift und so eine Kraftübertragung zwischen Antriebsvorrichtung und magnetischem Kraftwandler bewirkt.

Auf der Querwelle 5 befinden sich weiterhin eine mit ihr verbundene Querscheibe 29 sowie, auf dem dem Lager 4 gegenüberliegenden Ende, ein mit ihr verbundenes Kegelzahnrad 10.

Weiterhin befinden sich auf der Querwelle 19 eine mit ihr verbundene Querscheibe 17 sowie, auf dem dem Lager 18 gegenüberliegenden Ende, ein mit ihr verbundenes Kegelzahnrad 20.

Auf der Arbeitswelle 7 befinden sich eine mit ihr verbundene Zahnscheibe 13 sowie eine auf ihr in Lager 25 frei gegenüber ihr drehbar gelagerte, also freilaufende, Zahnscheibe 24.

Beide Zahnscheiben 13, 24 weisen eine Verzahnung jeweils am äußeren Rand der einander gegenüberliegenden Seiten auf, mit denen sie jeweils sowohl in Kegelzahnrad 10 also auch Kegelzahnrad 20 eingreifen.

Am äußeren Rand der der Verzahnung gegenüberliegenden Seite der Zahnscheiben 13, 24 ist jeweils ein Magnetelement 28, 14 vorhanden. Diese Magnetelemente 28, 14 sind jeweils als Zylinder ausgebildet und so magnetisiert, dass ihr Südpol an Ihrer Außenseite zumindest in dem Bereich, der vom Zahnscheibenmittelpunkt radial nach Außen weist, vorhanden ist.

Weiterhin ist jeweils in den Querscheiben 29, 17 ein integriertes Magnetelement 30, 22 vorhanden. Diese Magnetelement 30, 22 sind so in die jeweilige Querscheibe 29, 17 integriert, dass sie sich am äußeren Durchmesser derselben befinden. Dabei weist Magnetelement 30 eine Magnetisierung in der Weise auf, dass sein Südpol zumindest in dem Bereich vorhanden ist der in Richtung des Kegelzahnrad 10 weist. Magnetelement 22 weist eine Magnetisierung in der Weise auf, dass sein Nordpol zumindest in dem Bereich vorhanden ist der in Richtung des Kegelzahnrad 20 weist.

Alle Magnetelemente 14, 28, 22 30 weisen eine maximale Ausdehnung bezogen auf den Umfang der Scheibe (360°), auf der sie jeweils angebracht sind, von etwa 20° des Umfangs der jeweiligen Scheibe auf.

Die Zahnscheiben und die Querscheiben sind so dimensioniert und relativ zueinander angeordnet, dass in einer Anordnung der Zahn- und Querscheiben, die als Nullstellung bezeichnet wird, Magnetelemente 28 und 14 maximalen Abstand voneinander aufweisen, d.h. bezüglich des durch die Arbeitswelle 7 definierten gemeinsamen Mittelpunkts der Zahnscheiben liegen Magnetelemente 29 und 14 auf einem gemeinsamen Durchmesser der Scheiben einander gegenüber. Weiterhin weisen in der Nullstellung Magnetelement 28 und Magnetelement 30 minimalen Abstand voneinander auf, liegen sich also direkt gegenüber, und Magnetelement 22 und Magnetelement 30 weisen minimalen Abstand zueinander auf, d.h. befinden sich auf einer gedachten Linie parallel zur imaginären Achse der beiden Querwellen 5, 19. Durch diese Anordnung wird eine Synchronisation der Magnetelemente bewirkt.

Die Nullstellung wird bei einer vollen Umdrehung der Arbeitswelle und damit der Zahnscheiben wieder erreicht.

Im Betrieb wird über ein Antriebselement, wie beispielsweise einem Verbrennungs- oder Elektromotor (nicht gezeigt), Antriebswelle 1 in Rotation versetzt, was wiederum eine über Zahnräder 32 und 6 übertragene Rotation von Querwelle 5 und damit Querscheibe 29 und Kegelzahnrad 10 bewirkt. Diese Rotation wird über Kegelzahnrad 10 auf Zahnscheiben 24 und 13 übertragen, wobei diese wiederum Kegelzahnrad 20 und damit Querwelle 19 und Querscheibe 17 in Rotation versetzen. Durch die Anordnung der Kegelzahnräder 10, 20 und der Querscheiben 17, 29 ergibt sich eine gegensinnige Rotation sowohl der Querscheiben 17, 19 als auch der Kegelzahnräder 10, 20 relativ zueinander.

Die Positionen der Magnetelemente 28, 14, 22 und 30, die sich bei einer jeweiligen 180° Drehung der jeweiligen Scheibe, auf dem diese angebracht sind (24, 13, 17 und 29), von der Nullstellung ausgehend ergeben, sind als fiktive Positionen 23, 9, 15 und 8 gezeigt.

Durch die Verbindung von Zahnscheibe 13 mit Arbeitswelle 7 wird diese in Rotation versetzt und kann an ihren Enden 27, 11 mit einer Arbeitsmaschine (nicht gezeigt) verbunden werden. Die ebenfalls auf der Arbeitswelle 7 gelagerte Zahnscheibe 24 rotiert gegenüber der Arbeitswelle 7 freilaufend gegensinnig.

Im beispielhaften magnetischen Kraftwandler wird die über die Verbindungswelle 1 eingebrachte Rotationsbewegung auf die Arbeitswelle übertragen und diese wird durch die sich überlagernde Wechselwirkung von der Süd- und Nordpole der Magnetelemente 14, 22, 28 und 30 unterstützt.

### Bezugszeichenliste:

- 1: Verbindungswelle
- 2: Lager Verbindungswelle 1
- 3: Gehäuse
- 4: Lager Querwelle 5
- 5: Querwelle
- 6: Zahnrad
- 7: Arbeitswelle
- 8: fiktive Position Magnetelement 30
- 9: fiktive Position Magnetelement 14
- 10: Kegelzahnrad Querwelle 5
- 11: Ende Arbeitswelle 7
- 12: Lager Ende 11 Arbeitswelle 7
- 13: Zahnscheibe
- 14: Magnetelement Zahnscheibe 13
- 15: fiktive Position Magnetelement 22
- 16: Verzahnung Zahnscheibe 13
- 17: Querscheibe
- 18: Lager Querwelle 19
- 19: Querwelle
- 20: Kegelzahnrad Querwelle 19
- 21: Verzahnung Zahnscheibe 24
- 22: Magnetelement Querscheibe 17
- 23: fiktive Position Magnetelement 28
- 24: Zahnscheibe
- 25: Lager 25 Zahnscheibe 24 auf Arbeitswelle 7
- 26: Lager Ende 27 Arbeitswelle 7
- 27: Ende Arbeitswelle 7
- 28: Magnetelement Zahnscheibe 24
- 29: Querscheibe
- 30: Magnetelement Querscheibe 29
- 31: Zahnrad
- 32: Zahnrad

## Patentansprüche

1. Magnetischer Kraftwandler, **dadurch gekennzeichnet, dass** er folgendes umfasst:
eine erste Querwelle 5, die von einem Antrieb in Rotation versetzt werden kann, wobei auf der ersten Querwelle 5 eine erste Querscheibe 29 und ein erstes Kegelzahnrad 10 angeordnet sind, die jeweils mit der ersten Querwelle 5 verbunden sind,
eine zweite Querwelle 19, auf der eine zweite Querscheibe 17 und ein zweites Kegelzahnrad 20 angeordnet sind, die jeweils mit der zweiten Querwelle 19 verbunden sind,
eine Arbeitswelle 7, die gegenüber der Querwelle 5 winklig angeordnet ist, und auf der eine erste Zahnscheibe 13 und eine zweite Zahnscheibe 24 angeordnet sind, wobei die erste Zahnscheibe 13 mit der Arbeitswelle verbunden ist und die zweite Zahnscheibe 24 gegenüber der Arbeitswelle 7 freilaufend angeordnet ist, wobei
jeweils die Verzahnung von erstem Kegelzahnrad 10 und zweiten Kegelzahnrad 20 in jeweils die Verzahnung von erster und zweiter Zahnscheibe 13, 24 eingreifen, so dass im Betrieb des Kraftwandlers eine gemeinsame Rotation der Kegelzahnräder 10 und 20 und der Zahnscheiben 13 und 24 in der Weise bewirkt wird, dass sowohl eine gegensinnige Bewegung der ersten Zahnscheibe 13 gegenüber der zweiten Zahnscheibe 24, als auch eine gegensinnige Bewegung des ersten Kegelzahnrads 10 gegenüber dem zweiten Kegelzahnrad 20 erfolgt,
die erste Querscheibe 29 ein Magnetelement 30 umfasst, dessen einer Pol A sich auf der der Arbeitswelle 7 zugewandten Seite befindet,
die zweite Querscheibe 17 ein Magnetelement 22 umfasst, dessen einer Pol B sich auf der der Arbeitswelle 7 zugewandten Seite befindet,
an der dem ersten und zweiten Kegelzahnrad 10, 20 abgewandten Seite der zweiten Zahnscheibe 24 ein Magnetelement 28 befestigt ist, dessen einer Pol A radial nach Außen weist,
an der dem ersten und zweiten Kegelzahnrad abgewandten Seite der ersten Zahnscheibe 13 ein Magnetelement 14 befestigt ist, dessen einer Pol A radial nach Außen weist,
wobei weiterhin die Zahnscheiben 13 und 24 und die Querscheiben 29 und 17 so dimensioniert und relativ zueinander angeordnet sind, dass in einer Nullstellung das Magnetelement 28 der zweiten Zahnscheibe 24 und das Magnetelement 14 der ersten Zahnscheibe 13 maximalen Abstand voneinander aufweisen, das Magnetelement 28 der zweiten Zahnscheibe 24 und das Magnetelement 30 der ersten Querscheibe 29 minimalen Abstand voneinander aufweisen und das Magnetelement 22 der zweiten Querscheibe 17 und das Magnetelement 30 der ersten Querscheibe 29 minimalen Abstand zueinander aufweisen.

2. Magnetischer Kraftwandler nach Anspruch 1, **dadurch gekennzeichnet, dass** Arbeitswelle 7 gegenüber Querwelle 5 rechtwinklig angeordnet ist.

3. Magnetischer Kraftwandler nach einem der vorstehenden Ansprüche, **dadurch gekennzeichnet, dass** erste Querwelle und zweite Querwelle 19 auf einer gemeinsamen imaginären Achse angeordnet sind.

4. Magnetischer Kraftwandler nach einem der vorstehenden Ansprüche, **dadurch gekennzeichnet, dass** eines oder mehrere der Magnetelemente 14, 28, 22, 30 eine maximale Ausdehnung von 10 bis 30°, bezogen auf den Umfang der Scheibe (360°), auf der sie jeweils angebracht sind, aufweisen.

5. Magnetischer Kraftwandler nach einem der vorstehenden Ansprüche, **dadurch gekennzeichnet, dass** die Magnetelemente 28, 14 der Zahnscheiben 13, 24 jeweils am äußeren Rand der der Verzahnung gegenüberliegenden Seite der Zahnscheiben 13, 24 angebracht sind.

6. Magnetischer Kraftwandler nach einem der vorstehenden Ansprüche, **dadurch gekennzeichnet, dass** die Magnetelemente 28, 14 der Zahnscheiben 13, 24 jeweils als Zylinder ausgebildet und so magnetisiert sind, dass ihr Pol A an Ihrer Außenseite zumindest in dem Bereich, der vom Zahnscheibenmittelpunkt radial nach Außen weist, vorhanden ist.

7. Magnetischer Kraftwandler nach einem der vorstehenden Ansprüche, **dadurch gekennzeichnet, dass** das Magnetelement 30 der ersten Querscheibe 30 eine Magnetisierung in der Weise aufweist, dass sein Pol A zumindest in dem Bereich vorhanden ist der in Richtung des ersten Kegelzahnrads 10 weist und/oder das Magnetelement 22 der zweiten Querscheibe eine Magnetisierung in der Weise aufweist, dass sein Pol B zumindest in dem Bereich vorhanden ist der in Richtung des zweiten Kegelzahnrad 20 weist.

8. Magnetischer Kraftwandler nach einem der vorstehenden Ansprüche, **dadurch gekennzeichnet, dass** die Nullstellung nach einer oder mehrerer vollen Umdrehungen, vorzugsweise einer vollen Umdrehung, wieder erreicht wird.

9. Verfahren zum Betrieb eines magnetischen Kraftwandlers nach einem der vorstehenden Ansprüche.

10. Verwendung eines magnetischen Kraftwandlers nach einem der Ansprüche 1 bis 8 zum Betrieb einer Vorrichtung, wie eines Kraftfahrzeugs, Flugzeugs oder Schiffs.
